# EUROPEAN PATENT APPLICATION

(11) **EP 2 919 518 A1**
(43) Date of publication of application: **16.09.2015**
(21) Application number: 14160036.1
(22) Date of filing: 14.03.2014
(51) Int. Cl.: H04W 36/00, H04B 7/02

(54) **Handovers with co-operating cells configured to provide Coordinated Multi-Point transmission/reception**

(71) Applicant: FUJITSU LIMITED, Kawasaki-shi Kanagawa 211-8588 (JP)
(72) Inventor: Moulsley, Timothy, Caterham, Surrey CR3 5EE (GB); Li, Zhaojun, Guildford, Surrey GU3 2DJ (GB)
(74) Representative: Stebbing, Timothy Charles

(57) **Abstract**

The application relates to efficiently support handover in inter-eNB CoMP or other co-operating cell operation, particularly in heterogeneous network scenarios. The invention is based on the recognition that the information available in CoMP operations would be useful for handover management. An example of such information is CSI reports (RI, PMI, CQI) of individual UEs. According to the proposed procedure, the serving eNB (11a) of a UE **shares** information with several candidate target eNBs (11 b, 11 c) for load balancing purposes, for example a suggested CSI-RS configuration, so that a common CSI-RS pattern/configuration can be agreed among the co-operating neighbour eNBs. CSI reports of all the candidate cells from several UEs in a given area may be shared. Handover requests are sent to the target eNBs so that the target eNBs can choose to admit the suitable UEs. Responses are compared by the serving eNB (11 a) or by a central control entity to make a final handover decision.

## Description

### Field of the Invention

The present invention relates to wireless communication systems, for example systems based on the 3GPP Long Term Evolution (LTE) and LTE-Advanced (LTE-A) groups of standards, as well as IEEE 802.16 WiMAX systems, which may allow coordinated downlink transmission from at least one cell in a co-operating group of cells, to a given user equipment. More particularly, the present invention relates to handover procedures in a wireless communication system.

### Background of the Invention

Wireless communication systems are widely known in which base stations (BSs) communicate with user equipments (UEs) (also called terminals, subscriber stations, or mobile stations) within range of the BSs. The direction of transmission from the BS to UE is called the downlink (DL) and that from the UE back to the BS, the uplink (UL). Transmissions to and from UEs and especially transmissions of user data for providing various services, are referred to below as "traffic".

The wireless coverage area of a base station is generally referred to as a cell, and conventionally many BSs are provided in appropriate locations so as to form a network covering a wide geographical area more or less seamlessly with adjacent and/or overlapping cells, also called "macro cells" below. Typically, but not necessarily exclusively, DL and UL are both provided in a cell; another way to look at this is that a downlink cell is linked or associated with a corresponding uplink cell. Incidentally, references to "cells" henceforth implicitly include the BS(s) responsible for those cells, unless the context demands otherwise.

Each BS divides its available time and frequency resources in a given cell, into individual resource allocations for the UEs which it serves. The UEs are generally mobile and therefore may move among the cells, prompting a need for handovers of radio communication links between adjacent cells. For example, when the DL signal quality as measured by a UE, using reference signals transmitted by the BS drops below a certain threshold, the terminal is handed over to one of the suitable neighbour BSs.

Handovers may also be triggered as loads on the BSs vary, as in load balancing for example, where the network attempts to distribute the traffic evenly across the available BSs. A UE may be in range of (i.e. able to detect signals from) several cells at the same time, but in the simplest case it communicates with one "serving" cell. The serving cell may be one of a co-operating group of cells in a given geographical area, as explained later. In the case of more than one cell serving a UE, one of the cells may have a special status, and such a cell is referred to here as the "primary serving cell".

One type of cellular wireless communication network is based upon the set of standards referred to as Long-Term Evolution (LTE). In LTE, a measurement commonly used for handover is the Reference Signal Received Power (RSRP). In the simplest case of a UE being served by one cell, as the UE moves out of the coverage area of its current serving cell, the RSRP with respect to a neighbour cell will come to exceed by a sufficient margin called the "offset", the RSRP with respect to the serving cell. When this occurs, the UE transmits this information to the BS of the serving cell. In LTE, the BS is referred to as an enhanced-NodeB, eNodeB or simply eNB for short. The serving eNB (or possibly another node controlling the eNB) determines that a handover is required to another, "destination" eNB.

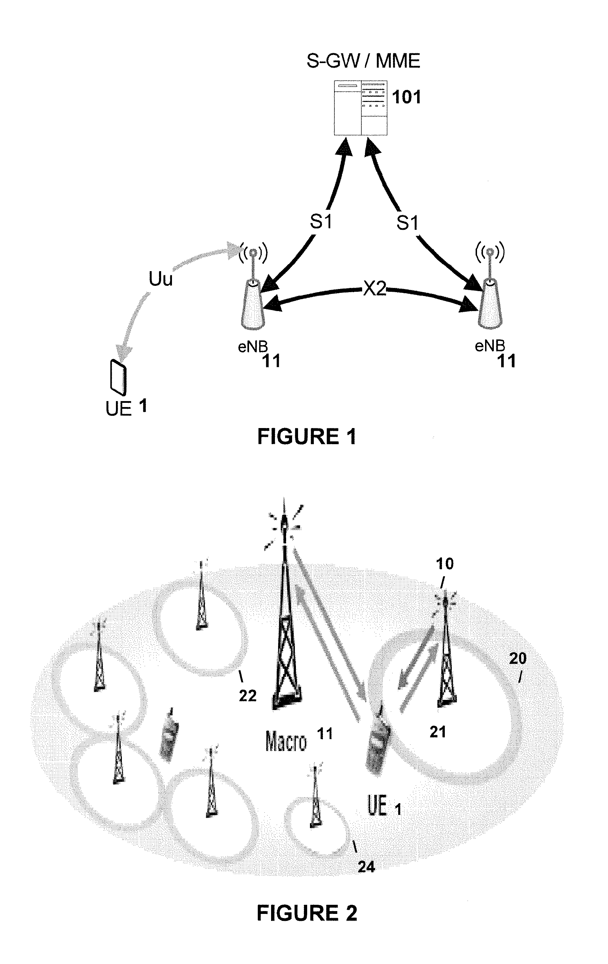

The network topology in LTE, showing "nodes" in the network at various levels, is illustrated in Figure 1. As can be seen, each UE 1 connects over a wireless link via a Uu interface to an eNB 11. As explained below, various types of eNB are possible having differing transmit powers and therefore providing coverage areas (cells) of differing sizes. Multiple eNBs deployed in a given geographical area constitute a wireless network called the EUTRAN (and henceforth generally referred to simply as "the network"). A wireless network provided by a given operator in a given area is also referred to as a Public Land Mobile Network (PLMN). There may be several PLMNs in operation in the same geographical area.

Each eNB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks, including other cellular wireless communication networks.

Meanwhile, an X2 interface is provided by which the eNBs can communicate among themselves. As an example of such communication, Relative Narrowband Transmit Power Indicator (RNTP) may be mentioned. This is an information message sent by an eNB to neighbour eNBs, indicating which resources in its DL transmission will exceed a given power threshold. The purpose of this message is for interference management, allowing neighbour eNBs to anticipate which resources will be liable to interference.

To facilitate measurements of the radio link properties by UEs, and reception of some transmission channels, reference signals are embedded in the transmissions from each antenna of an eNB or more accurately for LTE, "antenna port". The term "antenna port" is preferred when referring to transmissions from multiple antennas, since it is possible for multiple physical antennas to jointly transmit a given signal and thus act as a single antenna port.

The reference signals associated with each antenna port provide an amplitude and/or phase reference for allowing the UEs to correctly decode the remainder of the downlink transmission. In LTE, reference signals can be classified into a cell-specific (or common) reference signal (CRS), a Multicast-Broadcast Single Frequency Network (MBSFN) reference signal used in Multimedia Broadcast Multicast Service (MBMS), and a user equipment-specific reference signal (UE-specific RS). There are also positioning reference signals, and the UE-specific reference signals are also commonly termed demodulation reference signals, DM-RS. LTE-A introduces further reference signals including a UE-specific Channel State Information Reference Signal CSI-RS to support channel state feedback for more than four antenna ports and advanced techniques such as CoMP (see below).

It is possible to coordinate the transmissions among multiple antennas (or antenna ports) belonging to the same eNB (i.e. coordinating transmissions within a single cell) or among multiple eNBs (i.e. where adjacent or nearby cells co-operate to coordinate their transmissions) to reduce inter-cell interference and improve the data rate to a given UE. Such co-operative operation of cells includes Coordinated Multi-Point transmission/reception or CoMP. It will be evident that, where multiple eNBs are involved in the co-operative operation, mutual communication among the eNBs is required to co-ordinate them. Such communication would normally be made over the X2 interface as shown in Figure 1, if available.

Multiple cells, configured to provide CoMP with respect to a given UE (or set of UEs), are referred to as a "CoMP group" for that UE. (The corresponding eNBs can likewise be regarded as members of a CoMP group). The same cell/eNB may belong to more than one CoMP group defined in relation to different UEs or sets of UEs.

Of particular relevance to the invention to be described, one downlink scheme used in CoMP is "Coordinated Scheduling and/or Coordinated Beamforming (CS/CB)" as illustrated in Figure 2. In CS/CB, data to a single UE is transmitted from one serving cell, but decisions regarding user scheduling (i.e. the scheduling of timings for transmissions to respective UEs) and/or beamforming (in which the DL transmission to a UE is shaped to be directional towards that UE) are made with coordination among the co-operating cells. In other words, scheduling/ beamforming decisions are made with coordination between the cells participating in the coordinated scheme so as to prevent, as far as possible, a single UE from receiving signals from more than one cell. Thus, in coordinated scheduling, each UE is served by a serving cell but one cell may reduce its transmission power on a set of time-frequency resources for the benefit of UEs in a second cell.

As shown in Figure 2, there is a co-operating group (or set of) cells A, B, C and D as outlined by the dashed line and labelled at "1 - CoMP co-operating set". For illustrative purposes only, each cell is provided by a respective base station 11. In this example, the same set of cells forms a CoMP measurement set (outlined by the dotted line, labelled "2 - CoMP measurement set"), on which a UE 1 may make measurement reports. However, as indicated by the solid line labelled "3 - CoMP transmission points", only cell B is a serving cell, i.e. actively transmits data to the UE, while the user scheduling/beamforming decisions are made with coordination among cells A, B, C and D of the CoMP co-operating set so that the co-channel inter-cell interference among the co-operating cells can be reduced or eliminated.

It should be noted that this is only one possibility, and CoMP may also involve more than one serving cell jointly transmitting to the UE, of which one of the cells is called the primary serving cell. Transmissions to and from a UE are carried on so-called EUTRAN radio access bearers (E-RABs), and for example it is possible that one E-RAB may be provided on one cell of a CoMP group whilst another is handled by a different cell or combination of cells in the group. To explain this a little more, an E-RAB uniquely identifies the concatenation of an S1 Bearer and a corresponding Data Radio Bearer, which is a bearer between the UE and S-GW via an eNB. Each E-RAB may correspond to a specific service being provided to the UE (voice call, video stream, download, etc.) having a certain Quality of Service or QoS. Information about E-RABs is exchanged between the eNBs during handover.

Handovers occur not only between one cell and an adjacent cell as mentioned earlier, but also among co-operating cells, either to change a serving cell or to change the co-operating group of cells in some way. In the case of CoMP, handovers may involve handing over the role of primary serving cell from one cell to another cell, with other cells in the CoMP group perhaps staying the same (and the target cell quite possibly being a member of the existing CoMP group). The eNB controlling the primary serving cell may be assumed to be in charge of coordination of the CoMP group, as well as of creating, modifying or releasing the CoMP group, at least from the UE perspective.

Figure 2 shows CoMP being performed by cells of equal size, such as macro cells. Conventionally, a wireless cellular network is a homogeneous network providing a patchwork of wide-area or macro cells which, though they may vary in shape and size and overlap to a degree, each serve a distinct geographical area and have a similar status.

However, recently there is much attention being paid to so-called heterogeneous networks (also called small cell networks) in which there are layers cells of different sizes including, in addition to conventional macro cells, so-called "small cells" comprising femto and/or pico cells, the small cells located completely within the macro cells. The general motivation for such heterogeneous networks is to improve capacity of the macro cell network by providing hotspots within the macro cells. To maximise the capacity gains capable of being realised, it is important for the macro and small cells to co-operate to provide CoMP with respect to one UEs or a set of UEs. Thus, generally small cells employ licensed spectrum and are managed by an operator of the macro cells.

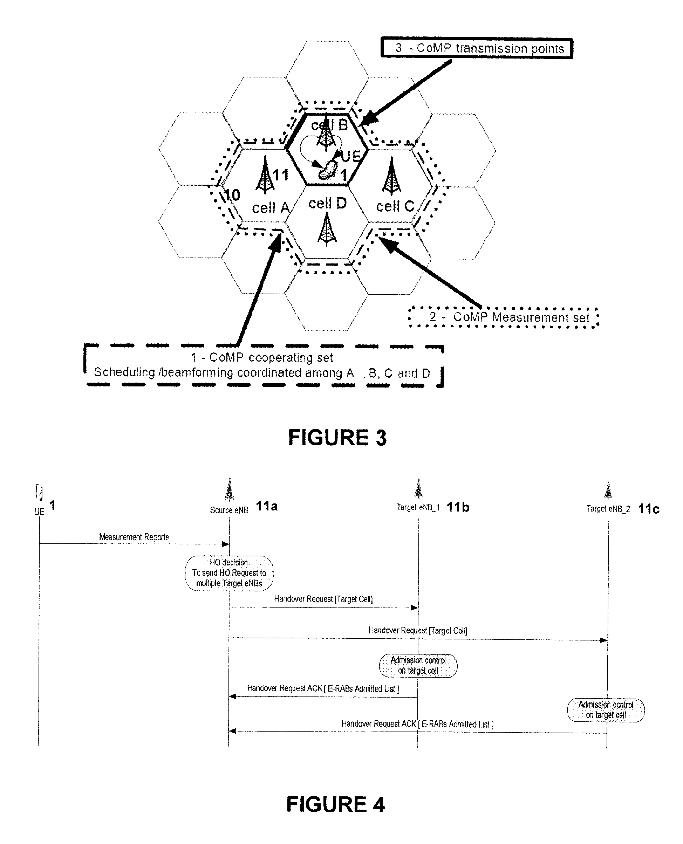

Figure 3 depicts a simple heterogeneous network. The large ellipse 10 represents the coverage area or footprint of a macro cell provided by a base station (macro BS) 11. The smaller ellipses 20, 22 and 24 represent pico cells within the coverage area of macro cell 10, each having a respective base station (pico BS), one such base station being shown at 21. Here, the macro cell is a cell providing basic "underlay" coverage in the network of a certain area, and the pico cells are overlaid over the macro cell using separate frequency spectrums for capacity boosting purposes particularly within so-called "hot spot zones". A UE 1 is able to communicate both with macro BS 11 and pico BS 21 as indicated by the arrows in the Figure. Thus, for example, the same UE may use both the macro cell as its primary serving cell and a pico cell as a secondary cell.

In the case of LTE, the macro cell is provided by the above mentioned eNB, also referred to in this context as a macro eNB. The small cells may be provided by miniaturised base stations called Home eNodeBs (HeNBs) which are expected to find widespread use in homes and offices, linked to the core LTE network via broadband Internet. The term eNB henceforth includes HeNB unless the context demands otherwise.

The UE will be expected to provide feedback to the network regarding how its transmission would be formed in terms of, e.g., transmission rank (RI), precoding (PMI) and modulation and data rate/coding scheme (Channel Quality Indication or CQI). This feedback information could be derived for some, or all, of the cells in the CoMP group or more precisely, some or all of the channels between the co-operating group of cells and the UE.

In LTE-A Release 10, the above mentioned CSI-RS were introduced which are defined for 1, 2, 4 or 8 antenna ports of a cell and which have a much lower density in time and frequency than the Common Reference Symbols (CRS), and a hence much lower overhead. Their purpose is to allow improved estimation of the channel for feeding back RI/PMI/CQI and possibly other related parameters to the network. CSI-RS can thus be viewed as LTE-A's solution to channel estimation and feedback for high-rate downlink data transmission scenarios. CSI-RS patterns in time and frequency can be configured by higher layers to allow considerable flexibility over which resource elements (REs) contain them.

Since LTE-A Release 11, to support CoMP operation, a UE can be configured with multiple CSI-RS patterns specific to its cell, including both non-zero-power (NZP) CSI-RS; and zero-power (ZP) CSI-RS for which the UE shall assume zero transmission power for the CSI-RS. A resource configured as a zero-power CSI-RS with respect to a serving cell can be assumed by the UE to be empty (free of DL transmission from the serving cell). In this way, the transmissions on channels in a co-operating group can be measured without interference from the serving cell. Resources reserved for ZP CSI-RS are also called CSI-IM for CSI Interference Measurement.

Thus, existing LTE-A standards provide for CoMP operation in the context of a heterogeneous network (small cell network). However, some aspects of the operation have yet to be worked out. For example, handovers can be expected to be more frequent than for the homogeneous network, owing to the smaller cell areas and more complex network structure.

Currently in LTE, the eNB to which a UE is currently connected configures the UE measurement procedures according to area restriction information. When moving away from the serving cell, the UE is triggered to send the measurement report. Based on these reports the existing or "source" eNB makes decision to hand over the UE to another, "destination" cell.

It is essential to guarantee the service continuity of a UE while it is handed over from the source cell to the destination cell due to the UE's movement across cell borders or the changes of the network condition (e.g. the quality of the radio channel used by the UE deteriorates). Based on current LTE specifications, the source eNB can initiate multiple handover preparation procedures towards different target eNBs, one of which becomes the destination cell.

Figure 4 illustrates the corresponding procedures in an LTE network. Upon the receipt of the measurement reports, the source eNB 11a makes the handover decision and initiates multiple handover preparation procedures by sending HO Request message to multiple target eNBs 11 b and 11c, each of which controls a target cell indicated in the message. These messages would normally be sent over the X2 interface mentioned with respect to Figure 1. The target eNB replies to the source eNB with a list of admitted E-RABs based on an admission control policy of the target cell. The source eNB 11a compares the responses, decides a preferred cell to which to handover (i.e., destination cell), and informs the UE and the corresponding eNB accordingly. As already mentioned, in the case of a CoMP group, the cell being handed over is normally (but is not necessarily) the primary serving cell. The UE need not be concerned with the other cells in the CoMP group.

In heterogeneous networks, UEs may experience frequent handovers due to the facts that the cell coverage is smaller and network condition is more complex. It becomes critical to:
- for individual users, guarantee a good user experience in terms of QoS (data rate, throughput etc.) and service continuity; and
- for network performance, maintain high resource utilisation and minimum signalling overhead.

There is a need to efficiently support handovers in this case.

### Summary of the Invention

According to a first aspect of the present invention, there is provided a handover method of a terminal in a wireless communication system in which a first base station co-ordinates with one or more second base stations to form a co-operating group of cells with respect to the terminal at least one of which cells is a serving cell of the terminal, the method comprising:
at the terminal, making measurements with respect to one or more cells in the co-operating group and reporting the measurements to the first base station;
at the first base station, based on said measurements, determining a need for handover of the terminal and sending a handover request to at least one second base station for requesting a change to a said serving cell and/or to the co-operating group of cells;
at a second base station, responding to the handover request; wherein:
   responding to the handover request takes into account information on the co-operating group of cells.

A terminal may have more than one serving cell. A "serving cell" means a cell among a co-operating group of cells which serves the terminal. To "serve" the terminal means to provide DL transmissions to and/or receive UL transmissions from, the terminal.

The "co-operating group of cells" may constitute a CoMP group for the terminal. However, the expression "co-operating group of cells" includes any type of co-operative operation amongst cells with respect to a UE or group of UEs. The co-operating group will comprise, in addition to the primary serving cell, at least one other cell which may or may not itself serve the terminal but at least co-ordinates its operation in view of the terminal, for example to avoid causing interference to the terminal.

A "handover request", as already indicated, is a message between the base stations which contains at least one of (a) a request to make a change to one or more of the serving cells for the terminal; or (b) a request to make a change to the co-operating group of cells of the terminal.

Consequently, the "handover" in the broad sense used here may transfer responsibility for part or all of transmissions to and from the terminal, from one cell to another, or in other words involve a change in at least one serving cell, or at least one cell in the co-operating group.

In one embodiment, the handover request is a request to change a primary serving cell of the terminal, where the primary serving cell is a serving cell which is responsible (or mainly responsible) for control signalling to and from the terminal. However, a handover (as defined for the purposes of this invention) need not necessarily result in a change of the primary serving cell. The handover may involve multiple terminals sharing the same co-operating group of cells, such as a common CoMP group.

The "information on the co-operating group of cells" means, as will become clearer from the following discussion, any information needed for cells to co-ordinate their operation, as in CoMP of LTE for example.

In the above method, preferably, information on the co-operating group of cells is included in the handover request. Alternatively or in addition, information on the co-operating group of cells is exchanged between first and second base stations prior to the handover request. The "information on the co-operating group of cells" may include information used to set up the co-operating group of cells, or other information related to co-operation of the cells as detailed below.

The handover request may further comprise an instruction to the second base station to reserve resource for the terminal. This indicates that the first base station regards the second base station concerned as a particularly strong candidate for the handover.

The terminal may be one of a set of terminals with respect to which the co-operating group of cells is formed, and in that case the handover request may apply to the set of terminals or a subset thereof.

In one form of the method, the response to the handover request is sent to the first base station and the first base station makes a handover decision based on each received response.

In another form of the method, the response to the handover request is sent to a control node of the wireless communication system and the control node makes a handover decision based on each received response.

The "information on the co-operating group of cells" referred to above may indicate any one or more of:
the measurements made at the terminal with respect to one or more cells in the co-operating group;
measurements made at the first base station on transmissions by the terminal;
estimated data throughput at the terminal;
resource utilisation in each of the co-operating group of cells;
configurations of reference signals used for the making of measurements at the terminal and/or at the first base station; and
results of co-ordination of reference signals among the co-operating group of cells.

Where a plurality of terminals are in range of one or more of the co-operating group of cells, the information may further comprise any one or more of:
the measurements made at any of said plurality of terminals with respect to some or all cells in the co-operating group;
measurements made at the first base station on transmissions by any of the terminals;
estimated data throughput at any of the terminals.

In any method as defined above, the response of the second base station to the handover request may indicate any of:
whether the second base station can admit the terminal for all traffic thereof;
a specified part of traffic of the terminal for which the second base station can admit;
a suggestion for modifying the co-operating group of cells or operation thereof;
resource utilisation per cell among the co-operating group of cells;
   and
whether or not resource has been reserved for the terminal.

In any method as defined above, the response may indicate another terminal, which is not the terminal (or one of the terminals) which the first base station has determined a need to hand over, but is another terminal (or terminals) which the second base station can admit. Alternatively the response may indicate traffic other than that specified in the request. In other words the second base station may decide that it cannot meet the handover request, but is able to assist in the first base station in another way, by offloading another terminal and/or traffic.

The present invention can be applied to LTE-A, which provides a CSI-RS as mentioned earlier. Thus, in one embodiment the wireless communication system is based on LTE-A and the information includes a common configuration for CSI-RS among the co-operating group of cells as well as CSI-RS reports of at least one terminal.

According to a second aspect of the present invention, there is provided a wireless communication system in which a first base station is arranged to co-ordinate with one or more second base stations to form a co-operating group of cells with respect to a terminal, at least one of which cells is a serving cell of the terminal, wherein:
the terminal is arranged to make measurements with respect to one or more cells in the co-operating group and report the measurements to the first base station;
the first base station is arranged to determine a need for handover of the terminal based on said measurements and to send a handover request to at least one second base station for requesting a change to a said serving cell and/or to the co-operating group of cells; and
the second base station is arranged to respond to the handover request; wherein:
the second base station is arranged to respond to the handover request by taking into account information on the co-operating group of cells.

According to a third aspect of the present invention, there is provided a first base station arranged to co-ordinate with one or more second base stations to form a co-operating group of cells with respect to a terminal, at least one of which cells is a serving cell of the terminal, wherein:
the first base station is arranged to receive, from the terminal, measurements with respect to one or more cells in the co-operating group;
the first base station is arranged to determine a need for handover of the terminal based on said measurements and to send a handover request to at least one second base station for requesting a change to a said serving cell and/or to the co-operating group of cells; and
the first base station is arranged to provide the second base station with information on the co-operating group of cells as part of the handover request and/or in advance of the handover request.

According to a fourth aspect of the present invention, there is provided a second base station arranged to co-ordinate with a first base station to form a co-operating group of cells with respect to a terminal, at least one of which cells is a serving cell of the terminal, the terminal being arranged to make measurements with respect to one or more cells in the co-operating group and report the measurements to the first base station, wherein:
the second base station is arranged to receive a handover request from the first base station, the handover request requesting a change to a said serving cell and/or to the co-operating group of cells; and
the second base station is arranged to respond to the handover request; wherein:
   the second base station is arranged to respond to the handover request by taking into account information on the co-operating group of cells.

The above system, first base station and second base station may share any of the optional features specified above with respect to the method of the invention.

The term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. The term "cell" is intended also to include sub-cells, which could be sub-divisions of a cell based on using particular antennas or corresponding to different geographical areas within a cell.

Much of the foregoing and subsequent description in relation to CoMP is based on the typical assumption that the cells in the co-operating group are at the same carrier frequency and have the same bandwidth. However, the invention can also be applied more broadly to co-operating cells at different carrier frequencies and with different bandwidths.

The cells may be associated with different base stations or with the same base station. The term "base station" itself has a broad meaning and encompasses, for example, an access point or transmission point as well as the eNB of LTE.

Computer program aspects of the invention relate to software (one or more computer programs) which when executed on a communications network cause it to carry out the method described above. The software may be provided on a non-transitory computer-readable medium which can be viewed as an article of manufacture.

Thus, in summary, embodiments of the present invention provide a handover enhancement mechanism in inter-eNB CoMP and co-operating cell scenarios. The serving eNB of a UE shares information with several candidate target eNBs for load balancing purposes, for example a suggested CSI-RS configuration, so that a common CSI-RS pattern/configuration can be agreed among the co-operating neighbour eNBs. CSI reports of all the candidate cells from several UEs in a given area may be shared so that the neighbour eNBs can choose to admit the suitable UEs. Handover requests are sent to the target eNBs so that the target eNBs can choose to admit the suitable UEs. Responses are compared by the serving eNB or by a central control entity to make a final handover decision.

In general, and unless there is a clear intention to the contrary, features described with respect to one aspect of the invention may be applied equally and in any combination to any other aspect, even if such a combination is not explicitly mentioned or described herein.

As is evident from the foregoing, embodiments of the present invention involve signal transmissions between cells and terminals (UEs) in a wireless communication system. The cells are associated with one or more base stations. A base station may take any form suitable for transmitting and receiving such signals. It is envisaged that the base stations will typically take the form proposed for implementation in the 3GPP LTE and 3GPP LTE-A groups of standards, and may therefore be described as an eNB (eNodeB) (which term also embraces Home eNodeB) as appropriate in different situations. However, subject to the functional requirements of the invention, some or all base stations may take any other form suitable for transmitting and receiving signals from terminals.

Similarly, in the present invention, each terminal (corresponding to a UE in the case of an LTE system) may take any form suitable for transmitting and receiving signals from base stations. For example, the terminal may take the form of a subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

### Brief Description of the Drawings

Reference is made, by way of example only, to the accompanying drawings in which:
Figure 1 illustrates a basic system architecture in LTE;
Figure 2 illustrates principles employed in Coordinated Multi-Point transmission (CoMP) as applied to cells;
Figure 3 illustrates the principle of a heterogeneous network;
Figure 4 shows a conventional handover procedure in LTE;
Figure 5 is a flow chart of a general invention embodiment;
Figure 6 is a schematic block diagram of a terminal for use in the present invention; and
Figure 7 is a schematic block diagram of a base station for use in the present invention.

### Detailed Description

Embodiments of the present invention will be described below with respect to CoMP in LTE by way of example.

As was mentioned in the introduction, Coordinated Multi-Point (CoMP) transmission and reception was introduced in LTE-Advanced Release 11 as a tool to improve the coverage of high data rates, the cell-edge throughput, and also to increase system throughput. However, support for CoMP involving multiple eNBs with non-ideal backhaul is still under discussion within LTE standards groups. Non-ideal backhaul is the typical backhaul widely used in the market, such as xDSL, microwave, and other backhauls such as relaying.

Efficient resource utilisation can be observed with CoMP techniques, such as coordinated scheduling and/or coordinated beamforming, in the following two deployment scenarios:
(i) CoMP operation between macro eNB and small cell eNBs in a heterogeneous network. Non-ideal backhaul between eNBs may occur in various ways including:
   · Between macro eNB and small cell eNBs within its coverage
   · Between small cell eNBs under the coverage of one macro cell
   · Between small cell eNBs of different cells in the same site.
(ii) CoMP operation between small cell eNBs in a heterogeneous network (where a macro cell is present but not included in the CoMP group). Again, non-ideal backhaul may exist as follows:
   · Between macro eNB and small cell eNBs within its coverage
   · Between small cell eNBs under the coverage of one macro cell
   · Between small cell eNBs of different cells in the same site.

In the above deployment scenarios, "in the same site" means in the same geographical area or in overlapping geographical areas.

Exchange of various types of information between eNBs to support CoMP operation is possible such as the following:
- Coordination of configuration:
   - NZP-CSI-RS resources
   - ZP-CSI-RS resources
   - DMRS information
   - SRS configurations
- Requests for resource and/or power restrictions
- Requests for rank/precoding restrictions
- Information about intended resource and/or power usage
- Information about intended rank/precoder usage
- RNTP enhancements such as
   - multiple transmission power thresholds
   - possibility to request changes to another node's frequency-domain power map
- Indication of potential degradations (e.g. interference level or CQI degradation) that may arise if another node uses certain resources or rank/precoders
- UE scheduling metric and/or CSI (e.g. long-term averaged or statistical properties) including one or more of:
   - CQI
   - PMI
   - RI
   - RSRP

The above list includes metrics referring to measurements made by a UE and reported to the eNB. Such measurements may be provided by the eNB receiving the reports, to other eNBs either directly, or processed in some way. For example the receiving eNB may generate an average DL channel quality or rate reported by UEs with currently active DL transmissions, and transmit this to other eNBs.

In heterogeneous networks, macro (or micro) cells may co-exist with considerable numbers of pico or even femto cells. UEs may experience frequent handovers owing to the factors that the cell coverage is smaller and network condition is more complex. It becomes critical to:
(i) for individual users, guarantee good users experience in terms of QoS (data rate, throughput, etc.) and service continuity; and
(ii) for network performance, maintain high resource utilisation and minimum signalling overhead.

In short, the problem requiring a solution is exactly how to efficiently support handover in inter-eNB CoMP or other co-operating cell operation, particularly in heterogeneous network scenarios. As already mentioned, "handover" in this context refers, usually, to the primary serving cell of a CoMP group. There is normally only one such cell.

The invention is based on the recognition that the information available in CoMP operations would be useful for handover management. Some examples of such information include:-
(a) CSI reports (RI, PMI, CQI) of individual UEs
(b) SRS received power of individual UEs
(c) User perceived throughput of individual UEs
(d) Resource utilisation per cell
(e) Used configurations of reference signals, CSI processes and CSI-IM configurations
(f) Result of coordination for reference signal configurations, CSI processes and CSI-IM configurations
(g) Proportional-Fair (PF) metric of individual UEs
(h) Enhanced RNTP-type information in frequency/time/power/spatial domain
(i) Enhanced ABS information in power and spatial domain
(j) Resource allocation in frequency/time/power/spatial domain
(k) The identity of cells forming the co-operating group for a given UE.

In the above list, item (c), "User perceived throughput" can be determined at the eNB by measuring the data rate achieved by averaging over periods when data is available for transmission, and can be calculated separately for DL and UL. Item (d), "Resource utilisation per cell", means the proportion (e.g. percentage) of resources available in a cell which are actually utilised. Item (f) refers to the results of co-ordination among eNBs in order to support CoMP operation. Item (h) may involve enhancements to RNTP (see introduction) by increasing the number of bits, allowing a finer resolution in the frequency domain, time domain variations, and RNTP for different modes of beamforming/precoding. Item (i) may include, for example, enhancing information relating to ABS (Almost Blank Subframes) by indicating different power levels per subframe, or possibly indicating different spatial properties such as beam forming/precoding. Item (k) may include additional information about the cells such as carrier frequency and system bandwidth.

With such information available in advance of handover, an efficient single or multiple handover can be executed, where the current serving eNB (i.e. source eNB) can choose the most suitable eNBs as target eNBs for a certain UE. Each target eNB can have better knowledge how the UE would be served if accepting the UE. In addition, the target eNB can also estimate the impact of admitting such a UE, for example, whether a new CoMP operation (in other words, forming a new CoMP group or modifying an existing one) is required; if so, what kind of arrangement is required in terms of coordination among neighbouring eNBs. This has various advantages.

Firstly, at least some of the information useful for handover can be exchanged among eNBs prior to any handover trigger. The need for gathering information in order to select target eNBs, and/or to communicate to target eNBs, is therefore reduced. Secondly, interference between transmissions in the neighbour cells can be avoided even after handover. Thirdly, the network coverage of high data rates and the cell-edge throughput can be improved, and thus system throughput can be increased. A better and more robust user experience can be achieved.

Although the proposed scheme is intended for inter-eNB CoMP in LTE, it is not limited to such applications.

In general, unless otherwise indicated, the embodiments described below are based on LTE Release 11, where the network operates using FDD and comprises one or more eNBs, each comprising a number of physical antennas and controlling one or more downlink cells, each downlink cell having a corresponding uplink cell. Each DL cell may serve one or more terminals (UEs) which may receive and decode signals transmitted in that serving cell. The information available in CoMP operations for a UE or several UEs, including but not necessarily restricted to the UE(s) to be handed over, is shared among a group of co-operating eNBs, either via peer to peer message exchange, or a centralised control node.

The centralised control node just mentioned can be one eNB or a centralised logical entity that has interfaces (including possibly a new logical interface) with eNBs in the CoMP group. Such an entity may be, but is not necessarily, a higher-level node than the eNBs. Either the existing X2 interface (Figure 1) or a new logical interface may be used for information exchange.

The handover procedure generally follows the existing sequence shown in Figure 4 but importantly, based on information shared in advance of the handover request, a target eNB can not only make a decision if it will admit the UE(s) the subject of the handover request, but also estimate the required CoMP operation and propose it to co-operating eNBs.

Such a "proposal" (which may also be thought of as an "offer" for the UE(s)/traffic in question, may be made as follows. The target eNB can estimate the best cells (e.g. based on the CSI reports of the UE and the requirements of its associated services) to be included in the new CoMP group when the UE is handed over to the target eNB. These best cells can be specified in the response message to the handover request from the source eNB and/or may be included in a message to a central control entity if present. Such a message can be sent over the X2 interface or via the new logical interface mentioned earlier.

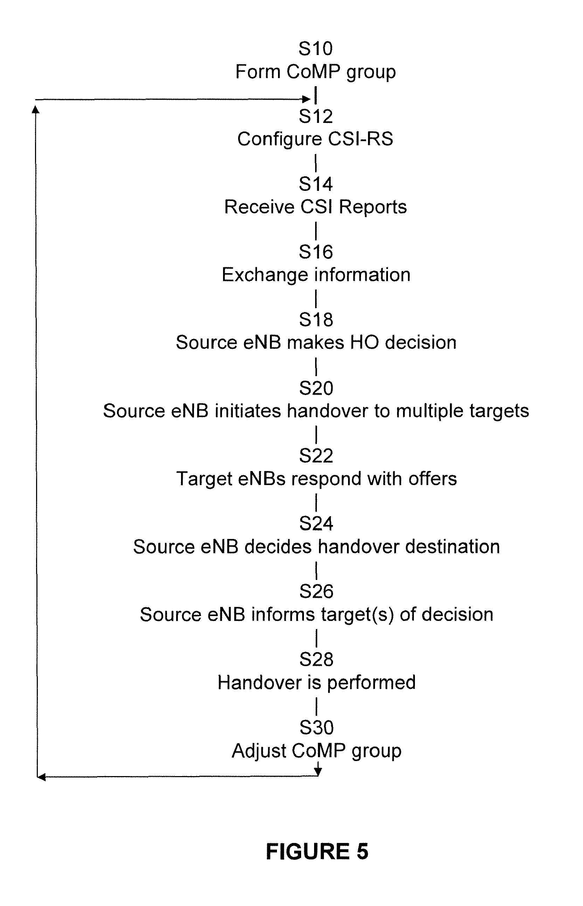

Figure 5 is a flowchart outlining steps taken in embodiments. It is assumed that there is a procedure in place for a configuring one or more groups of co-operating eNBs, and co-operating groups of cells served by those eNBs. In its simplest form this group could be defined as a set of neighbour cells or neighbour eNBs. It is further assumed that the handover is intended to change the primary serving cell, which is a typical but not necessarily essential use case.

It is further assumed for present purposes, that the source eNB receives the offers from target eNBs and takes the final decision on the destination cell, but as already mentioned this task could be delegated to a central control entity. Typically, though not necessarily, the source eNB is the eNB controlling the primary serving cell (primary serving eNB).

Firstly, (step S10) a co-operating group of cells is formed with respect to one UE or a set of UEs for the purposes of CoMP transmission. Although the primary serving eNB may contribute more than one of the cells, it is further assumed that at least one other eNB is involved such that inter-eNB handover is at least a possibility. As already mentioned, the CoMP may involve coordinated scheduling with one primary serving cell of the UE and the other cells co-ordinating their transmissions to avoid in-group interference. Such coordinated scheduling is tolerant of a degree of timing misalignment among the cells (unlike joint transmission for example) and is thus suited to the heterogeneous network case.

Next (S12), the network configures CSI-RS for the group of cells and a specific UE, including one or more zero-power CSI-RS patterns. This may be configured at the eNB level, for example at a macro cell eNB within the group. Where there is more than one co-operating eNB, this would require X2 interface exchange of the common group-wide CSI-RS pattern among all co-operating eNBs.

Then (S14), the UE (which henceforth should be understood as meaning either one UE or a group of UEs in the same CoMP group) sends CSI reports by measuring the CSI-RS configured in S12, typically to the primary serving eNB providing the primary serving cell. The reports may refer to any one or more of the cells in the CoMP group.

This information along with any other relevant information (see below) is exchanged at least among the eNBs providing the CoMP group (S16).

The information to be shared and of most relevance to the handover decision includes one or more of:
(a) CSI reports (RI, PMI, CQI) of individual UEs, based on measurements of CSI-RS transmitted by co-operating eNBs
(b) SRS received power of individual UEs
(c) User perceived throughput of individual UEs
(d) Resource utilisation per cell, including an estimated resource utilisation (based on the information received from other eNBs) if the UE is admitted
(e) Used configurations of reference signals, CSI processes and CSI-IM configurations
(f) Result of coordination for reference signal configurations, CSI processes and CSI-IM configurations.
Other information which may be shared relates to CoMP operation more than to handover and includes:
(g) Proportional-Fair (PF) metric of individual UEs
(h) Enhanced RNTP-type information in frequency/time/power/spatial domain
(i) Enhanced ABS information in power and spatial domain
(j) Resource allocation in frequency/time/power/spatial domain
(k) The identity of cells forming the co-operating group for a given UE.

In step S18, the need for a handover is recognised in the eNB of the primary serving cell (henceforth referred to as the source eNB). As already mentioned, the need for handover may be triggered by mobility of the UE, as reflected in the measurements reported by the UE, or for other reasons like load-balancing or network performance optimisation (e.g. better resource utilisation). The UE which is the subject of the handover is referred to below as a UE "in transit" (this does not necessarily imply that the UE is moving). The handover need not apply to all the traffic currently being handled by the source eNB. If only part of the traffic (such as one E-RAB) is to be handed over, this is also referred to as "offloading".

The source eNB identifies suitable neighbour eNBs as candidates or targets for handover (see Figure 4). This may include other eNBs already involved in the CoMP group, or other eNBs outside the CoMP group. A target may also be the source eNB itself, or in other words another cell provided by the source eNB (intra-eNB handover). It will be evident that identifying a target eNB implies, and is implied by, identifying a cell provided that eNB. Thus, the terms "eNB" and "cell" are used somewhat interchangeably.

Then in step S20, the source eNB sends handover requests to each of the target eNBs. The handover request may include at least some of the information to be exchanged among the eNBs according to S16.

In step S22, one or more target eNBs respond to the handover request with a "proposal" or "offer" as already mentioned, including information on the extent to which the eNB can meet the handover request, along with other related information (see below). The target eNB bases this response upon the information available to it, including any information provided in the handover request or exchanged beforehand. Note that this step is optional for each target eNB: eNBs unable to respond for any reason (for example due to insufficient processing power or lack of available resources) need not respond. In this embodiment, the proposals are sent to the source eNB.

Here, offers relating to individual E-RABs are possible. The source eNB may send a handover request message with a list of E-RABs to be handed over and a target eNB can respond by identifying one or more E-RABs which it is willing to admit.

In step S24, in this embodiment the source eNB compares the responses from the target eNBs and takes a decision on which eNB to hand over to, or more particularly (in this example) which cell to handover the role of primary serving cell to. The source eNB is guided in this decision by the principle of achieving maximum network usage in a certain area, for example. In other words the source eNB selects the proposal which offers the best network usage, based on its own estimation. The source eNB may also be guided in its decision by the other information available to it, including information exchanged earlier for CoMP purposes. The selected eNB is henceforth referred to as the destination eNB.

In step S26, the source eNB notifies its decision at least to the UE and to the destination eNB (and preferably also, though not necessarily at the same time, to any other eNBs involved in the CoMP group).

Handover is then performed in step S28, including the source eNB transferring any other necessary information to the destination eNB, the UE making contact with the destination eNB and receiving a response.

In step S30, the CoMP group may need to be adjusted or renewed to reflect the change in primary serving cell. It should be noted that a result of the handover may be that the former primary serving cell remains in the CoMP group for the UE whilst no longer being a serving cell. Another result might be that more than one eNB drops out of the CoMP group (so that the handover affects more than one cell). However, at least some changes in the CoMP group need not be apparent to the UE.

The process then returns to S12 (or S14 if no reconfiguration of the CoMP group is required), allowing the UE to make new measurement reports to the current primary serving cell (which may now be different from the previous one) and possibly prompting a new handover request.

Having outlined the procedure in embodiments, some features will now be explained in more detail.

### Step S20: Handover preparation -- handover initiation

As already mentioned, a source eNB initiates handover preparation for a UE or several UEs by sending a handover request to target eNBs. The UE or UEs in transit are configured with inter-eNB CoMP operation, which involves several co-operating eNBs. The candidate target eNBs for handover can be a subset of the eNBs involved in the CoMP operation for the UE/UEs in transit.

Where multiple UEs are to be handed over, the request includes an identification of each UE to be handed over, along with their related information. In the handover request and/or before, the source eNB provides the information to help candidate target eNBs to make a response, including:
(a) CSI reports (RI, PMI, CQI) of individual UEs in transit
   Such CSI reports are based on the UE's measurements of CSI-RS transmitted by some or all of the candidate target eNBs, e.g. the ones involved in CoMP operation for the UE or several UEs. This information should also include the details of the CSI-RS on which the CSI reports are based, to allow identification of appropriate cells to which the UEs could be handed over.
(b) SRS received power of individual UEs in transit
   This information includes the reports of some or all candidate target eNBs, and this information may be shared among co-operating eNBs prior to the handover procedure (e.g. in separate procedures).
(c) User perceived throughput of individual UEs in transit
   Multiple candidate target cells may be included in the handover request. In addition, for each candidate target cell an indicator may be used in the handover request message, which indicates to a candidate target eNB if radio resource needs to be reserved. This indicator is used to signify to the target eNB that the source eNB considers it a strong candidate for the handover. The indicator need not be sent to target eNBs that the source eNB considers to have a lower priority for the intended handover. For example, compared with other target eNBs, if a given eNB does not receive such an indicator it can interpret this to mean that it will have to admit the UE(s) in transit only if there is no other eNB which can admit the UE(s).

In a variation, the handover request message includes a list of one or more of the other eNBs that are also being sent the handover request message. This facilitates the maintenance of CoMP operation after handover.

In another variation, only part of a UE's traffic (such as one E-RAB) is intended for offloading. Consequently, the purpose of the procedure is for traffic offloading than actual handover.

### Step S22 - S24 - Handover preparation - response to a handover request

Upon the receipt of the handover request from a source eNB, the candidate target eNB will take into account of the information in the message and any information already available to it, and decide:
- If it has sufficient resource to admit all the UE(s)/traffic in transit
- If it cannot admit all the UEs in transit, then decide which UEs/traffic can be admitted based on, for example, resource usage efficiency
- If certain CoMP operation is required for the admitted UE(s)/traffic

In the first of the above cases, the target eNB alone is able to admit the UE (or traffic) to be handed over. In the second and third cases, the eNB can handle only part of the handover request, owing to its existing resource commitments, the third case including the target eNB providing an indication of which cells it thinks should be included in a new CoMP group to achieve the requested handover.

It should be noted that the target eNB need not be contributing to the resources already provided to the UE even though it is part of the CoMP group. As already mentioned, in CS/CB, CoMP is used to avoid interference by the co-operating cells co-ordinating their scheduling decisions. Once the decision is made, the target eNB sends a response back to the source eNB with the following information:
- What UE(s)/traffic are to be accepted; the admitted traffic can be indicated in the format of admitted E-RABs
- The cell which will be the primary serving cell for the (or each) UE once handed over
- Suggested CoMP operation for the admitted UE(s)/traffic, if required
- Resource utilisation per cell controlled by the target eNB, including the estimation of the admitted UE(s)/traffic
- Indication of whether or not resource has been reserved for the admitted UE(s)/traffic, and in which cell(s)

Where multiple UEs are to be handed over, the response includes an identification of which UEs can be admitted. In addition, it is also possible for the target eNB to suggest to the source eNB that it can admit a UE, or traffic of a UE, that is not already listed in the handover request, but information of which is known through the CoMP operation. That is, it may be that although the target eNB cannot handle the present handover request, it could assist the source eNB by taking over some other UE/traffic (such as the traffic relating to a specific E-RAB) thereby decreasing the load on the source eNB.

Based on the offers from each of the target eNBs, the source eNB can then decide in S24 either to proceed with the handover to that eNB, or to cancel the handover preparation towards that eNB (proceeding with handover to another one of the target eNBs). Cancellation may not be needed if there is clear indication that no radio resource is reserved in that eNB.

Depending on the responses received, the source eNB may need to reconsider the handover. For example if no suitable response is received then another round of the handover process (such as steps S14 to S24 in Fig. 5) may be required, perhaps with a different UE/traffic as the subject. Alternatively, if a response fulfils only parts of the UEs/traffic requested for handover, the source eNB may decide to proceed with the handover for that part, possibly starting a new handover procedure for the remaining part, or cancel the handover altogether.

In a variation, the proposal from a target eNB is also sent to one or more of the other target eNBs, allowing them to modify their behaviour (for example by refraining from sending their own proposal) or to be involved in the decision-making process, or simply improving inter-eNB coordination in order to reduce signalling overhead.

### Step S26 - S28: Handover and Post-handover

At the time of notifying the UE and destination eNB of its selection, or alternatively after handover / offloading takes place, the eNB may inform the co-operating eNBs (that is, those eNBs co-operating with respect to UE(s) being handed over) the result of the handover / offloading. This is needed for maintaining/adjusting the CoMP operation. For example any of the parameters a) - k) listed earlier may need to be reviewed.

Although Figure 4 shows the target eNBs as all separate from the source eNB, it is possible for the source eNB to consider one of its own cells as a target cell. Thus, it is possible that the outcome of the handover procedure is intra-eNB handover even if other eNBs have been involved in the procedure. In such a case of intra-eNB handover, the eNB controlling such handover may inform the co-operating eNBs prior to or post the handover procedure. This is needed so that CoMP operation can be maintained. The co-operating eNBs need to know the new serving cell.

In another variation, upon receipt of such notification, the co-operating eNB may object to the handover due to, for example, too much impact on its own operation. This may have several different outcomes. The CoMP operation could be adjusted to reduce the impact on the objecting eNB; or the objecting eNB may drop out of the CoMP operation; another round of the handover may be performed in the hope of achieving a better result; or the handover may have to be abandoned completely.

However, such an objection might be prohibited in the case that a central control entity (rather than the source eNB) decides the handover, as it may be assumed that the central control unit 20 can compel eNBs to follow instructions.

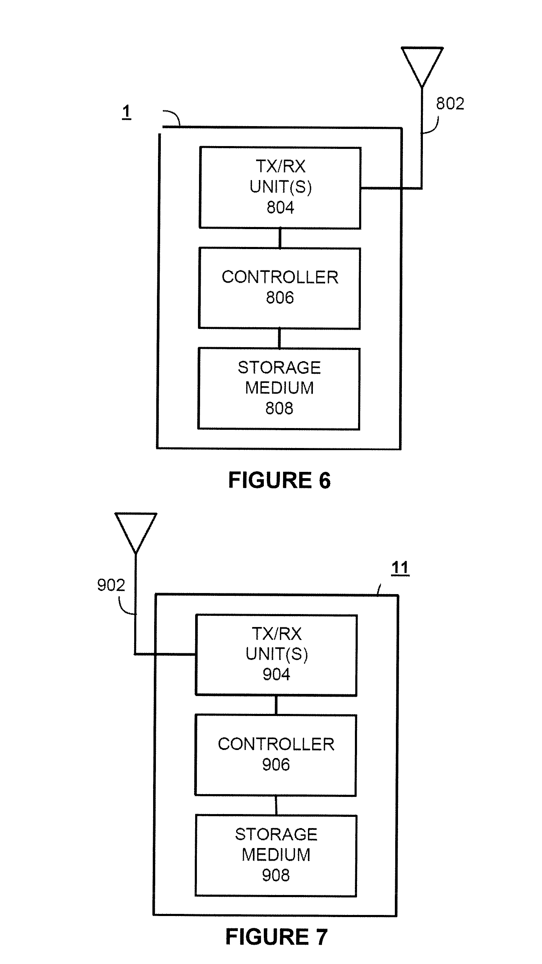

Figure 6 is a block diagram illustrating an example of a terminal 1 to which the present invention may be applied. The terminal 1 may include any type of device which may be used as a UE in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 1 includes transmitter/receiver unit(s) 804 connected to at least one antenna 802 (together defining a communication unit) and a controller 806 having access to memory in the form of a storage medium 808. The controller may be, for example, microprocessor, digital signal processor (DSP), ASIC, FPGA, or other logic circuitry programmed or otherwise configured to perform the various functions described above, such as sending measurement reports on CSI-RS to the primary serving cell. For example, the various functions described above may be embodied in the form of a computer program stored in the storage medium 808 and executed by the controller 806. The transmission/reception unit 804 is arranged, under control of the controller 806, to receive configuration messages, send measurement reports and so forth as discussed previously.

Figure 7 is a block diagram illustrating an example of a base station 11 to which the present invention may be applied. The base station includes transmitter/receiver unit(s) 904 connected to at least one antenna 902 (together defining a communication unit) and a controller 906. The controller may be, for example, microprocessor, digital signal processor (DSP), ASIC, FPGA, or other logic circuitry programmed or otherwise configured to perform the various functions described above, such as exchanging information with other base stations (eNBs), determining a need for handover when providing the current primary serving cell of a UE, and so forth. For example, the various functions described above may be embodied in the form of a computer program stored in the storage medium 908 and executed by the controller 906. The transmission/reception unit 904 is responsible for transmitting a configuration message for CSI-RS of the UE, normal PDSCH transmission including any zero-power REs, receiving a measurement report from the UE, and so on under control of the controller 906.

The embodiments may be combined as appropriate. Various modifications are possible within the scope of the present invention.

The term "CoMP" as used above is to be interpreted broadly and includes for example, Carrier Aggregation (CA) as well as dual connectivity of a UE. More generally, the present invention can be applied to cells co-operating in various ways and not only using CoMP as defined in LTE. In other words, any mode of operation involving multiple cells serving the same UE can be applicable in the present invention.

Although "handover" in LTE is generally assumed to involve a change in the primary serving cell, the present invention is also applicable to traffic offloading which does not necessarily involve a change in the primary serving cell. Thus for example it is possible that only part of the traffic of a cell (cell 1) is offloaded to another cell (cell 2) whilst cell 1 still remains part of the CoMP group. Another possibility is that cell 2 is a new cell to be added to the CoMP group. The term "handover" in the claims is thus to be interpreted broadly.

Although it was assumed above that the eNB controlling the primary serving cell is in charge of coordination of the CoMP group, as well as of creating, modifying or releasing the CoMP group, other arrangements are possible. For example a centralised control node may take this role, or distributed decision-making may be employed. In the latter case, each proposal from a target eNB would be transmitted to the other target eNBs (or to all eNBs in the same vicinity), and a consensus-building procedure followed to arrive at a final decision on the handover.

The invention can be applied for both LTE FDD and LTE TDD, and to other communication systems such as WiMAX.

As already mentioned, the term "cells" in the above description is to be interpreted broadly. Cells need not each have a different geographical area, or a different base station. In general, cells can be defined on a downlink, uplink, or on both. For the purpose of embodiments, in the CoMP group, the cells may be assumed to be at least downlink cells. As already mentioned, the cells may have different carrier frequencies and/or different bandwidths.

To summarise, the invention provides a handover enhancement mechanism in inter-eNB CoMP and co-operating cell scenarios. The serving eNB shares information with several candidate target eNBs for load balancing purposes, for example a suggested CSI-RS configuration, so that a common CSI-RS pattern/configuration can be agreed among the co-operating neighbour eNBs. CSI reports of all the candidate cells from several UEs in a given area may be shared so that the neighbour eNBs can choose to admit the suitable UEs.

### Industrial Applicability

Handover preparation based on the available information from co-operative cell (e.g. CoMP) operation for load balancing purposes, allows: 1) a source eNB to initiate a handover to several candidate target eNBs in order to offload one or several candidate UEs/traffic; 2) a target eNB to accept some or all the UEs/traffic; and a target eNB also to suggest UEs/traffic (not listed in the HO request) to be handed over. In this way, speedy handover to the best target cell is facilitated, and CoMP or other co-operative cell operation can be maintained following handover.

## Claims

1. A handover method of a terminal in a wireless communication system in which a first base station co-ordinates with one or more second base stations to form a co-operating group of cells with respect to the terminal, at least one of which cells is a serving cell of the terminal, the method comprising:
at the terminal, making measurements with respect to one or more cells in the co-operating group and reporting the measurements to the first base station;
at the first base station, determining a need for handover of the terminal and sending a handover request to at least one second base station for requesting a change to a said serving cell and/or to the co-operating group of cells;
at a second base station, responding to the handover request; wherein:
responding to the handover request takes into account information on the co-operating group of cells.

2. The method according to claim 1 wherein information on the co-operating group of cells is included in the handover request.

3. The method according to claim 1 or 2 wherein information on the co-operating group of cells is exchanged between first and second base stations prior to the handover request.

4. The method according to claim 3 wherein said information includes information used to set up the co-operating group of cells.

5. The method according to any preceding claim further comprising the handover request including an instruction to the second base station to reserve resource for the terminal.

6. The method according to any preceding claim wherein the terminal is one of a set of terminals with respect to which the co-operating group of cells is formed, and the handover request applies to the set of terminals or a subset thereof.

7. The method according to any preceding claim wherein the response to the handover request is sent to the first base station and the first base station makes a handover decision based on each received response.

8. The method according to any of claims 1 to 6 wherein the response to the handover request is sent to a control node of the wireless communication system and the control node makes a handover decision based on each received response.

9. The method according to any preceding claim wherein the information indicates any one or more of:
the measurements made at the terminal with respect to one or more cells in the co-operating group;
measurements made at the first base station on transmissions by the terminal;
estimated data throughput at the terminal;
resource utilisation in each of the co-operating group of cells;
configurations of reference signals used for the making of measurements at the terminal and/or at the first base station; and
results of co-ordination of reference signals among the co-operating group of cells.

10. The method according to claim 9 wherein a plurality of terminals are in range of one or more of the co-operating group of cells and the information further comprises any one or more of:
the measurements made at any of said plurality of terminals with respect to some or all cells in the co-operating group;
measurements made at the first base station on transmissions by any of the terminals;
estimated data throughput at any of the terminals.

11. The method according to any preceding claim wherein the response indicates any of:
whether the second base station can admit the terminal for all traffic thereof;
a specified part of traffic of the terminal which the second base station can admit;
a suggestion for modifying the co-operating group of cells or operation thereof;
resource utilisation per cell among the co-operating group of cells;
and
whether or not resource has been reserved for the terminal.

12. The method according to any preceding claim wherein the response indicates another terminal, which is not the terminal the first base station has determined a need to hand over, but which the second base station can admit.

13. The method according to any preceding claim wherein the wireless communication system is based on LTE-A and the information includes a common configuration for CSI-RS among the co-operating group of cells as well as CSI-RS reports of at least one terminal.

14. A wireless communication system in which a first base station is arranged to co-ordinate with one or more second base stations to form a co-operating group of cells with respect to a terminal, at least one of which cells is a serving cell of the terminal, wherein:
the terminal is arranged to make measurements with respect to one or more cells in the co-operating group and report the measurements to the first base station;
the first base station is arranged to determine a need for handover of the terminal and to send a handover request to at least one second base station for requesting a change to a said serving cell and/or to the co-operating group of cells; and
the second base station is arranged to respond to the handover request; wherein:
the second base station is arranged to respond to the handover request by taking into account information on the co-operating group of cells.

15. A first base station arranged to co-ordinate with one or more second base stations to form a co-operating group of cells with respect to a terminal, at least one of which cells is a serving cell of the terminal, wherein:
the first base station is arranged to receive, from the terminal, measurements with respect to one or more cells in the co-operating group;
the first base station is arranged to determine a need for handover of the terminal and to send a handover request to at least one second base station for requesting a change to a said serving cell and/or to the co-operating group of cells; and
the first base station is arranged to provide the second base station with information on the co-operating group of cells as part of the handover request and/or in advance of the handover request.

16. A second base station arranged to co-ordinate with a first base station to form a co-operating group of cells with respect to a terminal, at least one of which cells is a serving cell of the terminal, the terminal being arranged to make measurements with respect to one or more cells in the co-operating group and report the measurements to the first base station, wherein:
the second base station is arranged to receive a handover request from the first base station, the handover request requesting a change to a said serving cell and/or to the co-operating group of cells; and
the second base station is arranged to respond to the handover request; wherein:
the second base station is arranged to respond to the handover request by taking into account information on the co-operating group of cells.

## Amended claims

### Amended claims in accordance with Rule 137(2) EPC.

1. A handover method of a terminal in a wireless communication system based on LTE-A, the method comprising:
at the terminal, making measurements with respect to one or more cells and reporting the measurements to a first base station;
at the first base station, determining a need for handover of the terminal and sending a handover request to at least one second base station; and
at a second base station, responding to the handover request; **characterised in that**:
the first base station co-ordinates with one or more second base stations to form a co-operating group of cells with respect to the terminal, at least one of which cells is a serving cell of the terminal, said measurements being with respect to one or more cells in the co-operating group;
the handover request is for requesting a change to a said serving cell and/or to the co-operating group of cells; and
responding to the handover request takes into account information on the co-operating group of cells, the second base station responding to the handover request by indicating another terminal, which is not the terminal the first base station has determined a need to hand over, but which the second base station can admit.

2. The method according to claim 1 wherein information on the co-operating group of cells is included in the handover request.

3. The method according to claim 1 or 2 wherein information on the co-operating group of cells is exchanged between first and second base stations prior to the handover request.

4. The method according to claim 3 wherein said information includes information used to set up the co-operating group of cells.

5. The method according to any preceding claim further comprising the handover request including an instruction to the second base station to reserve resource for the terminal.

6. The method according to any preceding claim wherein the terminal is one of a set of terminals with respect to which the co-operating group of cells is formed, and the handover request applies to the set of terminals or a subset thereof.

7. The method according to any preceding claim wherein the response to the handover request is sent to the first base station and the first base station makes a handover decision based on each received response.

8. The method according to any of claims 1 to 6 wherein the response to the handover request is sent to a control node of the wireless communication system and the control node makes a handover decision based on each received response.

9. The method according to any preceding claim wherein the information indicates any one or more of:
the measurements made at the terminal with respect to one or more cells in the co-operating group;
measurements made at the first base station on transmissions by the terminal;
estimated data throughput at the terminal;
resource utilisation in each of the co-operating group of cells;
configurations of reference signals used for the making of measurements at the terminal and/or at the first base station; and
results of co-ordination of reference signals among the co-operating group of cells.

10. The method according to claim 9 wherein a plurality of terminals are in range of one or more of the co-operating group of cells and the information further comprises any one or more of:
the measurements made at any of said plurality of terminals with respect to some or all cells in the co-operating group;
measurements made at the first base station on transmissions by any of the terminals;
estimated data throughput at any of the terminals.

11. The method according to any preceding claim wherein the response indicates any of:
whether the second base station can admit the terminal for all traffic thereof;
a specified part of traffic of the terminal which the second base station can admit;
a suggestion for modifying the co-operating group of cells or operation thereof;
resource utilisation per cell among the co-operating group of cells;
and
whether or not resource has been reserved for the terminal.

12. The method according to any preceding claim wherein the wireless communication system is based on LTE-A and the information includes a common configuration for CSI-RS among the co-operating group of cells as well as CSI-RS reports of at least one terminal.

13. A wireless communication system based on LTE-A, wherein:
a terminal is arranged to make measurements with respect to one or more cells and report the measurements to a first base station;
the first base station is arranged to determine a need for handover of the terminal and to send a handover request to at least one second base station; and
the second base station is arranged to respond to the handover request; **characterised in that** :
the first base station is arranged to co-ordinate with one or more second base stations to form a co-operating group of cells with respect to the terminal, at least one of which cells is a serving cell of the terminal, said measurements being with respect to one or more cells in the co-operating group;
the handover request is for requesting a change to a said serving cell and/or to the co-operating group of cells; and
the second base station is arranged to respond to the handover request by taking into account information on the co-operating group of cells, and by indicating another terminal, which is not the terminal the first base station has determined a need to hand over, but which the second base station can admit.

14. A first base station for use in a wireless communication system based on LTE-A and arranged to receive, from a terminal, measurements with respect to one or more cells;
the first base station being arranged to determine a need for handover of the terminal and to send a handover request to at least one second base station; **characterised in that**
the first base station is arranged to co-ordinate with one or more second base stations to form a co-operating group of cells with respect to a terminal, at least one of which cells is a serving cell of the terminal, said measurements being with respect to one or more cells in the co-operating group;
the handover request is for requesting a change to a said serving cell and/or to the co-operating group of cells; and
the first base station is arranged to provide the second base station with information on the co-operating group of cells as part of the handover request and/or in advance of the handover request, and to receive from the second base station a response to the handover request indicating another terminal, which is not the terminal the first base station has determined a need to hand over, but which the second base station can admit.

15. A second base station for use in a wireless communication system based on LTE-A and arranged to receive a handover request with respect to a terminal from a first base station after the first base station has received measurements with respect to one or more cells from the terminal;
the second base station being arranged to respond to the handover request;
**characterised in that**:
the second base station is arranged to co-ordinate with the first base station to form a co-operating group of cells with respect to the terminal, at least one of which cells is a serving cell of the terminal, wherein:
the handover request requests a change to a said serving cell and/or to the co-operating group of cells; and
the second base station is arranged to respond to the handover request by taking into account information on the co-operating group of cells, and by indicating another terminal, which is not the terminal the first base station has determined a need to hand over, but which the second base station can admit.
